# NEW EUROPEAN PATENT SPECIFICATION

(11) **EP 3 034 839 B2**
(45) Date of publication and mention of the opposition decision: **14.12.2022**
(45) Mention of the grant of the patent: 04.03.2020
(21) Application number: 15197804.6
(22) Date of filing: 03.12.2015
(51) Int. Cl.: F02C 7/224

(54) **MEANS AND ARRANGEMENT FOR FUEL ICING PROTECTION**
MITTEL UND ANORDNUNG FÜR EINEN KRAFTSTOFFVEREISUNGSSCHUTZ
DISPOSITIF ET AGENCEMENT DE PROTECTION CONTRE LE GEL POUR CARBURANT

(30) Priority: 18.12.2014 GB 201422585
(43) Date of publication of application: 22.06.2016
(73) Proprietor: Rolls-Royce plc, London N1 9FX (GB)
(72) Inventor: Wang, Yi, Derby, Derbyshire DE24 8BJ (GB); Reid, Mark P, Derby, Derbyshire DE24 8BJ (GB); Jones, David I, Derby, Derbyshire DE24 8BJ (GB)
(74) Representative: Rolls-Royce plc

(56) References cited:
- EP-A2- 0 953 749
- GB-A- 2 282 186
- GB-A- 2 501 198
- US-A- 5 121 598
- US-A- 5 241 814
- US-A1- 2010 089 026
- US-A1- 2010 263 348
- US-A1- 2011 023 444
- US-A1- 2011 023 444
- US-A1- 2013 036 738
- US-A1- 2013 283 811

## Description

### FIELD OF THE DISCLOSURE

The present disclosure relates to temperature control of aircraft fuel. In particular, the disclosure relates to a new arrangement for improving fuel icing protection.

### BACKGROUND OF THE DISCLOSURE

The fuel flow from an aircraft fuel tank to gas turbine engines can contain water. When engines are required to operate in low ambient temperatures, in particular temperatures below 0°C, there is a risk that this water will freeze. In such circumstances, the ice will normally be present to the engine as dispersed ice particles in suspension. These ice particles can lead to failure of the fuel system, for example by blocking units in the fuel flow passages or causing malfunction of fine clearance valves by adhering to the surfaces of these valves in the fuel system.

The problem is typically managed by heating the fuel, for example by using heat from the engine oil, via a fuel and oil heat exchanger (FOHE). However, at certain engine operation conditions, the heat from engine oil may not be sufficient to eliminate the fuel icing threat.

Various additional fuel heating means for fuel icing-protection exist (see, for example, US 6,939,392, US 2011/185702, and US 2010/319359). These, and similar, prior art solutions typically address the fuel icing problem either by including a further dedicated fuel heater, or by using the exhaust gas heat, etc. to raise the fuel temperature. Utilising an external heat source to heat the fuel leads to increased weight/cost/complexity in the fuel system, which is undesirable. In addition, there are risks of fuel overheating in the failure scenario when the fuel can come into direct contact with the heating source. With the heating source temperature potentially exceeding the fuel ignition temperature, this clearly has significant implications in relation to engine safety.

US5241814 relates to a program-controlled heat management system for an aircraft's bypass gas turbine (turbofan) engine installation, in which the engine's fuel system is put into direct heat exchange relationship with the engine's own oil system, and with an engine-driven electrical generator's oil system, by means of respective fuel/oil heat exchangers and also into selective indirect heat exchange relationship with a variable proportion of the engine's bypass air means of an engine oil/air heat exchanger. The fuel system is switchable between four different fuel flow configurations in order to vary the heat flows between the fuel system and the oil systems, two of the fuel flow configurations also involving recirculation of fuel from the engine's fuel system to a fuel tank in the aircraft wing in order to put the fuel system into selective heat exchange relationship with the tank and hence with the airstream passing over the wing. Temperatures in the oil and fuel systems are monitored and kept within predetermined limits by selecting the appropriate fuel flow configuration and selectively dumping heat to the environment through the engine oil/heat exchanger and the aircraft wing in a way which maximizes the fuel efficiency of the engine.

GB2501198 relates to a fuel circuit of an aeronautical turbine engine, comprising a main fuel line intended to supply fuel to a combustion chamber of the turbine engine and including a positive-displacement pump, an auxiliary fuel line connected to the main fuel line at a joint located downstream of the pump and intended to supply fuel to hydraulic actuators for controlling variable geometry devices of the turbine engine, the auxiliary fuel line including electro-hydraulic servo valves upstream of each cylinder, and a fuel pressure regulating valve arranged on the main fuel line downstream of the pump.

US2013/036738 relates to a fuel supply assembly supplying a combustion chamber of a turbomachine with fuel and pressurizing the fuel, including: a first pump that pressurizes fuel drawn from tanks of an aircraft; a second pump that raises pressure beyond an outlet pressure of the first pump, and that provides constant fuel delivery, some of fuel leaving the second pump being sent to the combustion chamber via a direct circuit, the part of fuel not sent to the combustion chamber being recirculated, via a recirculation circuit, to upstream of the second pump; a hydraulic unit metering delivery to be injected into the combustion chamber of the turbomachine by a metering device on the direct circuit and at least one heat exchanger through which the fuel passes. The exchanger is positioned in a direct circuit downstream of the point at which the recirculation circuit branches off and upstream of the fuel metering device.

US2010/263348 relates to a gas turbine engine fuel system including a fuel tank for storing fuel, a heat exchanger through which the fuel from the fuel tank can pass, a fuel pump located downstream from the heat exchanger for pumping the fuel, a fuel metering unit for metering the fuel pumped by the fuel pump, an additive tank for storing a fuel additive, an additive delivery subsystem for mixing the fuel additive with the fuel at or before the heat exchanger to generate a fuel and fuel additive mixture, and a combustor located downstream of the fuel metering unit where the fuel and fuel additive mixture is delivered for combustion. The fuel additive comprises a fuel stabilizer for reducing fuel coking.

GB2282186 discloses that the amount of fuel supplied by a low pressure pump and a high pressure pump to combustion means is controlled by a control unit. If most of the fuel delivered by the pumps is required by the engine a clutch engages to provide a direct mechanical drive between the pumps so that they are driven by gear train at the same speed. However if the combustion equipment requires a reduced flow of fuel the clutch disengages and the excess fuel is diverted by a valve to a turbine. The turbine drives the low pressure pump at a higher speed than the speed of the high pressure pump. The energy of the diverted fuel is converted to mechanical energy to drive the turbine so that the temperature rise of the diverted fuel is reduced.

US2011/023444 discloses a fluid delivery system in a gas turbine engine that includes an electric motor, a first fluid pump system and a second fluid pump system. The electric motor operates at a variable speed. The first pump system includes a first pump driven by the motor to deliver a first fluid to the gas turbine engine. The second pump system includes a second pump driven by the motor to deliver a second fluid to the gas turbine engine, the second pump having a variable displacement.

It is an aim of the present disclosure to provide a means of adjusting/controlling fuel temperature which does not require an external heating source. The disadvantages and risks associated with such external heating can thereby be avoided.

### BRIEF SUMMARY OF THE DISCLOSURE

The present disclosure aims to improve fuel icing-protection by controlling the potential heating within the fuel system.

According to a first aspect of the disclosure there is provided a fuel delivery system as defined in the appended Claim 1. Further beneficial features are recited in the associated dependent claims.

In a typical fuel delivery system the high pressure (HP) fuel pump that delivers fuel to a combustor is a gear or vane type pumping device driven by a gear arrangement via a power offtake shaft coupled to the engine main shaft. As a result, the fuel pump speed and capacity is proportional to the engine shaft speed. The delivery pressure of the fuel system downstream of the HP pump is also a function of engine power and hence also varies with shaft speed.

To account for performance deterioration over the life of the system, the HP pump is typically designed to provide a maximum flow in excess of the demand from the engine operating at its highest power. A fuel metering device between the HP pump and the combustor provides the appropriate fuel to the combustor, the remainder being directed into a spill loop and 'spilled' back into the fuel system at a suitable location, for example at the HP pump inlet. The dynamic energy from spilling back the excess fuel, which is dependent on the engine speed, generates a certain amount of heat within the system.

This unregulated generated heat is generally considered a parasitic loss which should be minimised by appropriate design of the system.

The disclosure instead makes use of the abovementioned phenomenon as a means of controlling fuel temperature, in particular to avoid fuel icing in cold conditions. By actively controlling one or more of the pressure, the flow rate or the volume of fuel flow provided to a fuel metering device independently of engine operating conditions, the disclosure allows the characteristics of the flow through the fuel spill loop to be controlled. This in turn allows control of the heat generated from the energy released when the surplus fuel is spilled back to the low pressure side (for example, upstream) of the pump. Additional work done by the pump in providing excess flow pressure or volume also leads to increased heat generation from the pump itself.

The system of the present disclosure takes advantage of a commonly unwanted feature of fuel delivery systems, namely the heat generation associated with the energy transfer from spilled back surplus fuel from a fuel pump. Adjusting fuel flows and/or pressures in the fuel system by means of, for example, variable capacity pumping means and/or by varying flow resistance in the fuel system provides controlled heat generation in fuel system.

This new arrangement avoids the additional weight/cost/complexity when external fuel heating means is used and it also avoids the potential engine safety risk of relying on external heat source.

A variable flow restrictor is provided as a means to control the pressure of the fuel flow delivered to the fuel metering device. Such a variable flow restrictor is integral with the pump. The flow restriction may be adjusted to control the pressure of the flow to the fuel metering device, and thereby the pressure of the spill flow from the fuel spill loop. Changes in the energy of the spill flow can thus be achieved with or without variable capacity pumping means.

The discharge point of the fuel spill loop may be located immediately upstream, for example, at a low pressure side, of the pump to maximise the influence of the generated heat on the pump, and to minimise the length of the fuel spill loop and thus minimise heat and energy losses in the surplus flow.

Alternatively, the discharge point may be located further upstream in the system to influence other components of the system. For example, the discharge point may be located upstream of a filter and/or a heat exchanger, such as a fuel and oil heat exchanger, provided within the system upstream of the pump. Providing a discharge point upstream of such components can reduce the need for bypass valves or similar which are typically provided to provide a flow path if the component become blocked.

In certain embodiments, the fuel spill loop may be provided with a plurality of discharge points, and means may be provided for selecting one of said plurality of discharge points. A choice could then be made between providing maximum heat generation to the pump, or a possibly lower level of heating to more of the system.

A temperature sensor is preferably provided for sensing the temperature of the fuel within the system. Control of the system, including the pressure and/or volume of the fuel flow and, if provided, selection of the discharge point, could be based on the readings from the temperature sensor. In this regard, it may be preferable to provide a plurality of temperature sensors at spaced locations within the system to determine the temperature of the fuel at a number of different locations.

The disclosure also provides a non-claimed method of controlling the temperature of fuel in a fuel delivery system. Further beneficial features of the method are recited in the associated dependent claims.

Controlling the pressure or volume of fluid flow influences the amount of work done by a fuel pump, and thus the heat generated by the pump. Typically, a fuel delivery system will incorporate a spill loop allowing surplus flow to spill back into the system, generating further energy and thus heat in the system. Where such a spill loop is provided, changing one or more of the pressure and volume of the fuel flow will also affect the energy in this surplus fuel flow, and thus change the heat generated from this phenomenon. By allowing control independently of engine operating conditions, the disclosure allows controlled adjustment of the fuel temperature. To provide increased control, both flow volume and flow pressure can be controlled.

Control of the flow volume and/or the flow pressure may be based on the temperature of the fuel in the system, either at one or more particular locations or in general.

The non-claimed method may be employed using a fuel delivery system as previously described.

The method may be employed to increase fuel temperature, for example by increasing the pressure and/or volume of the fuel flow; or may be employed to reduce fuel temperature, for example by reducing the pressure and/or volume of the fuel flow. In systems where a spill loop with multiple outlets is provided, the method may also control selection of the discharge point to increase or, in particular, to decrease the fuel temperature as desired.

The disclosure beneficially relies predominantly on components already in the fuel system, or components that can be readily substituted therewith and the benefits can be achieved within their original design capacity. Although described predominantly as a means for increasing fuel temperature for avoiding fuel icing in cold conditions, it should be readily understood that the disclosure could also be used to minimise heat generation and thus minimise fuel temperature in hot conditions. This is beneficial because cooler fuel, especially during hot/warm day engine operations, leads to decreased fuel degradation (lacquering etc.) and hence improves the fuel system reliability.

The disclosure therefore provides a feasible solution for controlling fuel temperature across the whole engine operation envelope.

Wherever practicable, any of the essential or preferable features defined in relation to any one aspect of the disclosure may be applied to any further aspect.

Accordingly the disclosure may comprise various alternative configurations of the features defined above.

### BRIEF DESCRIPTION OF THE DRAWINGS

Practicable embodiments of the disclosure are described in further detail below by way of example only with reference to the accompanying drawings, of which:
Figure 1 shows a schematic diagram of a typical aircraft fuel system; and
Figure 2 shows a schematic diagram of a modified fuel system in accordance with the present disclosure.

### DETAILED DESCRIPTION OF THE DISCLOSURE

This present disclosure controls the potential heating within a fuel system. Hence an example of a conventional fuel system and its operation will be first described to provide a clear understanding of the modifications made by the disclosure.

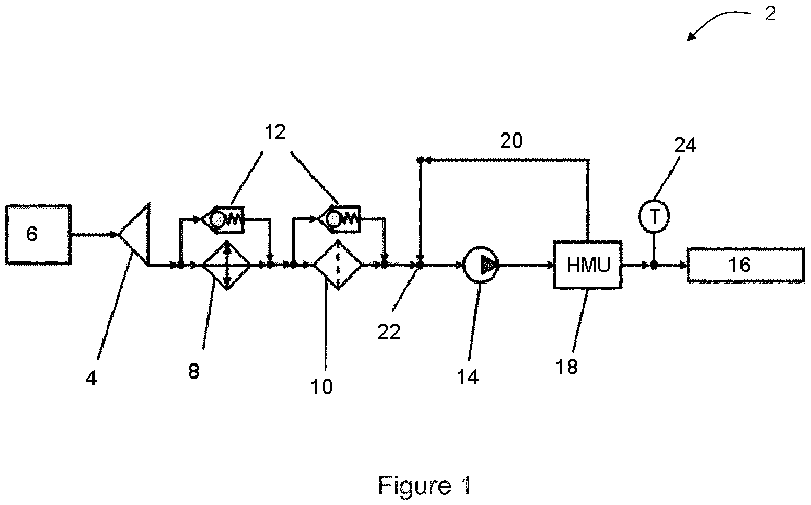

A typical fuel system 2 is illustrated in Figure 1. It consists of a low pressure (LP) pump 4 for pumping fuel from an aircraft tank 6, which represents the upstream end of the system, to a moderate pressure. A fuel and oil heat exchanger (FOHE) 8 is provided downstream of the LP pump 4 to enable heat transfer to the fuel from engine oil. A filter 10 is provided downstream of the FOHE 8 to maintain fuel cleanness. Bypass valves 12 are provided for both the FOHE 8 and the filter 10 to provide a flow path for fuel in the event that one or other of these becomes blocked during operation.

Downstream of the filter 10, a high pressure (HP) pump 14 is provided to further raise the fuel pressure to a sufficiently high level that the fuel can be delivered to a combustor 16 (or be used as the source for valve actuation). A hydro-mechanical unit (HMU) 18, which houses all actuation servo valves/lines, is located downstream of the HP pump 14. The HMU 18 additionally acts as a fuel metering device to control the amount of fluid that flows to the combustor 16 based on the demands of the engine, and direct any surplus fuel through a fuel spill loop 20 which 'spills' the surplus fuel back into the system 2 at a location 22 upstream of the HP pump 14. Also illustrated in Figure 1, between the HMU 18 and the combustor 16 is a temperature sensor 24 for measuring the temperature of the fuel in the system 2.

The HP pump 14 shown in Figure 1 is a gear or vane type pumping device, and is driven by a gear arrangement via a power offtake shaft coupled to the engine main shaft. Hence the speed of the HP pump 14 is proportional to the engine shaft speed, as is the pump capacity. The delivery pressure of the fuel system 2 downstream of the HP pump 14 is also a function of engine power, and therefore also varies with shaft speed.

The HP pump 14 has been designed based on the maximum fuel flow demand for the engine, with an additional margin added to account for pump performance deterioration over the life of the HP pump 14 or the system 2 as a whole. This is the conventional approach in the design of such HP pumps. The HP pump 14 power setting is determined by the maximum pressure rise needed from the engine operation envelope, which typically occurs at a high power engine operation condition. It should be understood that a significant difference therefore exists in terms of the fuel flow between the fuel flow demand and the HP pump delivery at low power engine operation, with the fuel flow demand being significantly less than that delivered by the HP pump. The HMU 18 will spill any surplus fuel back into a suitable position in the fuel system. As shown, the location 22 is at the inlet of the HP pump 14.

There are three main heat sources in the fuel system 2 of Figure 1, namely:
1. the heat transfer from engine oil at the FOHE 8;
2. the heat generated during operation of the fuel pumps 4,14, the vast majority of which comes from the HP pump 14; and
3. the pressure energy released when the surplus fuel is discharged from the fuel spill loop back into the system 2.

All three heat sources vary with the engine operations, specifically decreasing when the engine operates from high power to lower power. For illustration, taking the maximum engine operation conditions of a large civil engine as the full capacity reference point, the heat from HP pump 14 and spill pressure energy release reduces to ∼20% at low engine operation. The HP pump delivery flow reduces to ∼66% at low engine operations.

This disclosure proposes a new arrangement and means for improving fuel icing protection by controlling the heat generation within the fuel system.

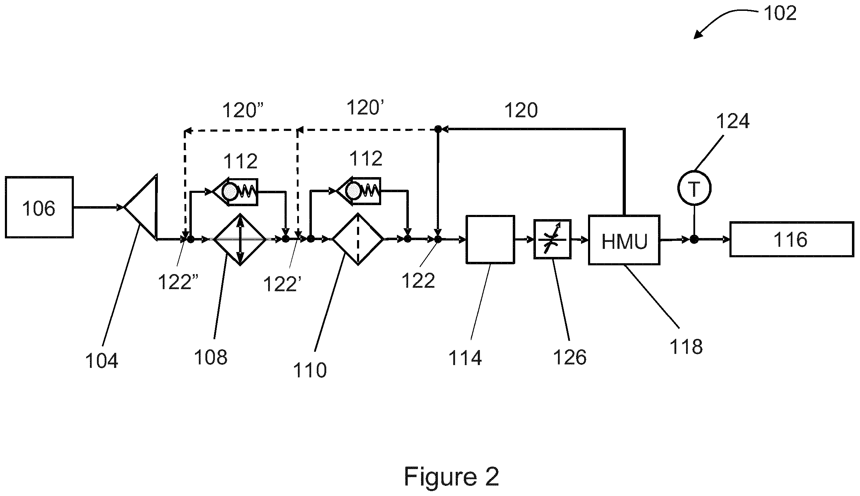

A fuel delivery system 102 in accordance with the disclosure is schematically shown in Figure 2. The components shown in the system 102 of Figure 2 are generally identified by a reference numeral that is spaced by one hundred from that used for the equivalent feature in Figure 1, for example, LP pump 104, Fuel tank 106 etc. For brevity, these features will not be described again in relation to Figure 2 except where required to highlight the benefits of the disclosure.

The fuel delivery system 102 of Figure 2 includes a variable capacity HP pump means 114 instead of the conventional gear/vane HP pump 14 of Figure 1. A flow restrictor 126 is also included downstream of the variable HP pumping means 114. The restrictor 126 has a varying geometrical feature that can be adjusted during engine operations to vary the degree of restriction to the fuel flow. The principle of the new arrangement and method is to adjust the HP pump 114 delivery flow and/or the delivery pressure to control the heat generated directly by the HP pump 114 and/or the pressure energy released into fuel from fuel spill loop 120.

Examples of how the disclosure allows the temperature generation to be increased, to improve the fuel icing protection, are provided below. Predicted results for low power engine operation, obtained using the typical large civil engine production configuration thermal and dynamical model, are also provided.

### Option 1: Increasing the delivery flow to the HMU 118 using the variable capacity HP pumping means 114.

This leads to increased flow in the spill loop 120. The heat input to the fuel is increased both by the increased HP pump 114 power transfer and by the increased pressure energy release from the higher spill flow from the spill loop 120.

Predictions suggest that both HP pumping means heat and the pressure energy released by the spill flow to the fuel would be more than doubled if the delivery flow of the variable capacity HP pump 114 is set to correspond to that at the maximum engine operation power level.

### Option 2: Increasing the HP pump delivery pressure by increasing the friction resistance from the variable flow restrictor 126.

The variable flow restrictor 126 can be, for example, a modulated valve. By setting the valve to a small flow area position, the pressure loss across the flow restrictor 126 is increased. More mechanical power would be required from the pumping means 114 to maintain a certain flow volume, and more heat would also be released by the spill flow that has a higher pressure.

Predictions are the heat generation from the HP pumping means 114 would increase only slightly, but that the heat from the spill flow could be made to increase significantly, to around five times that typically released during low power engine operation.

It should be noted that the arrangement of this option can beneficially be used in fuel system arrangements where a conventional gear/vane pump 14 is used rather than variable capacity pumping means 114.

### Option 3: Combined use of the above two options.

Combining the previous two options allows delivery flow from the variable capacity HP pump 114 to be set to correspond to that at the maximum engine operation power level, and the variable delivery pressure to be set at a level significantly higher than that at normal low power engine operation. In this case, the heat generated from the HP pumping means 114 is predicted to increase to over three times that generated at normal low power engine operation, to a value approximately equal to that at maximum power engine operation. The heat generated from the spill flow from spill loop 120 also increases significantly as a function of the delivery pressure level set, to approximately ten times that at normal low power engine operation based on the settings outlined above. This is higher than the heat generation from the conventional fuel system arrangement at the maximum engine operation.

The disclosure can be applied, for example according to one of the above options, when the temperature sensor 124 detects that the fuel temperature has fallen below a predetermined threshold indicative of the possibility of fuel icing.

The variable capacity HP pumping means 114 can be of any suitable type available, either mechanically driven, such as the variable displacement ring pump or variable piston pump, or electrically by electrical motor.

Adjustment of the delivery flow and pressure from the variable capacity HP pumping means 114 can be implemented, for example, as single step changes based on pre-determined mapping of heat demand vs. fuel temperature rise or can be made based on real time incremental changes using targeted fuel temperature.

The variable restriction means 126 can be any suitable type device, achieving the function of varying the flow resistance on demand, such as a modulated valve with the flow area of the valve being adjustable from large area (low flow resistance) to small area (high flow resistance). The variation can be achieved by suitable actuation arrangement either hydraulically or mechanically in smooth transition or incremental step changes. The control of the variation may be passive, or active based on engine operation parameters.

In the illustrated example the adjustments made on flow and pressure are limited to remain below the maximum designed pump capacity for the conventional fuel system. As such, the benefits of this described embodiment are demonstrated in all engine operation conditions apart from operation at maximum power. In principle, however, it is feasible to design the variable capacity pumping means 114 to have a capacity greater than that of the current pump 14, which would also provide similar benefits at maximum power engine operation conditions.

The spill flow discharge position 122 shown in Figure 2 is located downstream of FOHE 108 and the filter 110, similar to the discharge position 22 shown in Figure 1. The increased heat resulting from the disclosure improves fuel icing protection only to units included located downstream of the discharge/spill back position 122, so such a spill flow arrangement would improve the icing protection of the pumping means 114 and HMU 118 only, and the system 102 would still rely on the bypass arrangement 112 for preventing FOHE 108 and filter 110 blockage.

However, alternative discharge positions 122',122" of the spill flow could be provided further upstream in the system 102 by increasing the length of the spill loop 120', 120". This is illustrated using broken lines in Figure 2. For example, a discharge position 122' between the FOHE 108 and the filter 110 would increase fuel icing protection to the filter 110, and an outlet 122" at the inlet to FOHE 108 would provide increased fuel temperature upstream of both the FOHE 108 and filter 110. It should be understood, therefore, that moving the discharge position 122,122',122" further upstream leads to improved fuel icing protection of more units in the system 102.

Lengthening the spill loop 120, 120', 120" may reduce the temperature of the fuel and/or the flow energy at the discharge point 122, 122', 122", lessening the protection that would otherwise be provided to the HMU 118. Although this may be undesirable in some operating conditions, the improved overall level of heat generation provided by the disclosure means that a useful temperature increase can still be expected in most cases even when the disclosure is used to protect the entire system 102.

It may be possible to incorporate a spill loop 120" with multiple discharge points 122,122', 122", along with some means of selecting a particular discharge point, such as a series of valves. This would provide the possibility of selecting a fuel discharge point 122,122',122" that is most appropriate to any particular ambient conditions and/or engine operating state to provide a further level of control of fuel temperature within the system 102.

The variable restriction means 126 is shown in Figure 2 as a separate component located downstream of the variable capacity HP pumping means 114. Possible alternative means of increasing the heat generation could be to increase the internal leakage of the variable capacity HP pumping means 114 and to maintain the same pumping output flow by embedding the variable restriction means 126 within the pump 114. This would tend to worsen pump performance/efficiency and hence increase pumping heat generation.

The heat generation from pumping means has typically been seen as a parasitic loss which should be minimised within a fuel delivery system 2. The disclosure instead makes use of this commonly unwanted feature to adjust the heat generation associated with the energy transfer.

The disclosure arose following investigations aimed towards increasing fuel temperature for fuel icing protection, so the description tends to focus on this operation. However, it will be clear to all skilled in the area that the variable capacity pumping could also be used to reduce the amount of spill flow and hence reduce the heat input into fuel during hot or warm day engine operations. As discussed, fuel delivery systems typically incorporate a pump with excess capacity leading to surplus fuel demand, and fuel spill, even at high power operations. This surplus flow could be reduced using variable capacity pumping means, and/or the pressure of the flow could be reduced, for example by expanding a variable flow restrictor, to reduce the heat generated in the system. A longer fuel spill loop, to a discharge point further upstream in the system, could also help to reduce the maximum fuel temperature. A spill loop with a plurality of selectable discharge points would provide flexibility to lengthen the spill loop as required.

Cooler fuel during hot/warm day engine operations would lead to decreased fuel lacquering etc and hence improve the fuel system reliability. Together with the proposed means of adjusting fuel flow and pressure during cold operations as described above, the disclosure thus provides a whole engine solution to cover the whole engine operation envelope.

## Claims

1. A fuel delivery system (102) for an aircraft, the fuel delivery system comprising:
a pump (114);
a fuel metering device (118) located downstream of the pump (114); and
a fuel spill loop (120) from the fuel metering device (118) to a discharge point (122) at a location upstream of the pump (114); wherein the fuel metering device (118) regulates the fuel flow to a combustor and directs surplus fuel delivered by the pump (114) through the fuel spill loop (120), and wherein the pump (114) comprises a variable capacity pump to control the volume of fuel delivered to the fuel metering device (118) independently of the engine operating conditions, the fuel delivery system further comprising a variable flow restrictor (126) to control the pressure of the fuel flow delivered to the fuel metering device (118), wherein the variable flow restrictor (126) is integral with the pump (114).

2. The fuel delivery system (102) as claimed in claim 1, further comprising a filter (110) located upstream of the pump (114), wherein the discharge point (122) of the fuel spill loop (120) is at a location upstream of the filter (110).

3. The fuel delivery system (102) as claimed in claim 1 or 2, further comprising a heat exchanger (108) located upstream of the pump (114), wherein the discharge point of the fuel spill loop (120) is at a location upstream of the heat exchanger (108).

4. The fuel delivery system (102) as claimed in claim 3, wherein the heat exchanger is a fuel and oil heat exchanger (108).

5. The fuel delivery system (102) as claimed in claim 3 or 4, wherein the discharge point (122') of the fuel spill loop (120) is at a location immediately upstream of the heat exchanger (108).

6. The fuel delivery system (102) as claimed in any one of the preceding claims, wherein the fuel spill loop (120) comprises a plurality of discharge points (122,122', 122"), and wherein means are provided for selecting one of said plurality of discharge points (122,122',122").

7. The fuel delivery system (102) as claimed in any one of the preceding claims, further comprising a temperature sensor (124) for sensing the temperature of the fuel.

8. The fuel delivery system (102) as claimed in claim 7, wherein a plurality of temperature sensors are provided at spaced locations within the fuel delivery system (102).

## Patentansprüche

1. Kraftstoffabgabesystem (102) für ein Flugzeug, wobei das Kraftstoffabgabesystem umfasst:
eine Pumpe (114);
eine Kraftstoffdosiervorrichtung (118), die sich stromabwärts der Pumpe (114) befindet; und
und eine Kraftstoffüberlaufschleife (120) von der Kraftstoffdosiervorrichtung (118) zu einer Abgabestelle (122) an einer Position stromaufwärts der Pumpe (114); wobei die Kraftstoffdosiervorrichtung (118) den Kraftstoffstrom zu einem Verbrenner reguliert und einen von der Pumpe (114) gelieferten Kraftstoffüberschuss durch die Kraftstoffüberlaufschleife (120) leitet und wobei die Pumpe (114) eine Pumpe mit variabler Kapazität umfasst, um das an die Kraftstoffdosiervorrichtung (118) gelieferte Kraftstoffvolumen unabhängig von den Motorbetriebsbedingungen zu steuern, wobei das Kraftstoffabgabesystem ferner einen variablen Strömungsbegrenzer (126) umfasst, um den Druck des an die Kraftstoffdosiervorrichtung (118) gelieferten Kraftstoffstroms zu steuern, wobei der variable Strömungsbegrenzer (126) einstückig mit der Pumpe (114) ist.

2. Kraftstoffabgabesystem (102) nach Anspruch 1, ferner umfassend einen Filter (110), der sich stromaufwärts der Pumpe (114) befindet, wobei die Abgabestelle (122) der Kraftstoffüberlaufschleife (120) an einer Position stromaufwärts des Filters (110) ist.

3. Kraftstoffabgabesystem (102) nach Anspruch 1 oder 2, ferner umfassend einen Wärmetauscher (108), der sich stromaufwärts der Pumpe (114) befindet, wobei die Abgabestelle der Kraftstoffüberlaufschleife (120) an einer Position stromaufwärts des Wärmetauschers (108) ist.

4. Kraftstoffabgabesystem (102) nach Anspruch 3, wobei der Wärmetauscher ein Kraftstoffund Ölwärmetauscher (108) ist.

5. Kraftstoffabgabesystem (102) nach Anspruch 3 oder 4, wobei die Abgabestelle (122') der Kraftstoffüberlaufschleife (120) an einer Position unmittelbar stromaufwärts des Wärmetauschers (108) ist.

6. Kraftstoffabgabesystem (102) nach einem der vorangehenden Ansprüche, wobei die Kraftstoffüberlaufschleife (120) eine Vielzahl von Abgabestellen (122, 122', 122") umfasst und wobei Mittel zum Auswählen einer der Vielzahl von Abgabestellen (122, 122', 122") bereitgestellt sind.

7. Kraftstoffabgabesystem (102) nach einem der vorangehenden Ansprüche, ferner umfassend einen Temperatursensor (124) zum Erfassen der Temperatur des Kraftstoffs.

8. Kraftstoffabgabesystem (102) nach Anspruch 7, wobei eine Vielzahl von Temperatursensoren an beabstandeten Positionen im Kraftstoffabgabesystem (102) bereitgestellt sind.

## Revendications

1. Système de distribution de carburant (102) pour un aéronef, le système de distribution de carburant comprenant :
une pompe (114) ;
un dispositif de dosage de carburant (118) situé en aval de la pompe (114) ; et
un circuit pour les déversements de carburant (120) du dispositif de dosage de carburant (118) à un point d'évacuation (122) en un emplacement en amont de la pompe (114) ; le dispositif de dosage de carburant (118) assurant la régulation du débit de carburant à une chambre de combustion, et dirigeant l'excédent de carburant refoulé par la pompe (114) à travers le circuit pour les déversements de carburant (120), et la pompe (114) comprenant une pompe à cylindrée variable assurant la régulation du volume de carburant distribué au dispositif de dosage de carburant (118) indépendamment des conditions de service du moteur, le système de distribution de carburant comprenant en outre un limiteur de débit variable (126) assurant la régulation de la pression du débit de carburant distribué au dispositif de dosage de carburant (118), le limiteur de débit variable (126) faisant partie intégrante de la pompe (114).

2. Système de distribution de carburant (102) selon la revendication 1, comprenant en outre un filtre (110) situé en amont de la pompe (114), le point d'évacuation (122) du circuit de déversement de carburant (120) se trouvant en un emplacement en amont du filtre (110).

3. Système de distribution de carburant (102) selon la revendication 1 ou 2, comprenant en outre un échangeur de chaleur (108) situé en amont de la pompe (114), le point d'évacuation du circuit de déversement de carburant (120) se trouvant en un emplacement en amont de l'échangeur de chaleur (108).

4. Système de distribution de carburant (102) selon la revendication 3, l'échangeur de chaleur étant un échangeur de chaleur carburant et huile (108).

5. Système de distribution de carburant (102) selon la revendication 3 ou 4, le point d'évacuation (122') du circuit de déversement de carburant (120) se trouvant en un emplacement immédiatement en amont de l'échangeur de chaleur (108).

6. Système de distribution de carburant (102) selon une quelconque des revendications précédentes, le circuit de déversement de carburant (120) comprenant une pluralité de points d'évacuation (122,122', 122"), et étant prévu un dispositif pour la sélection d'un de ladite pluralité de points d'évacuation (122,122', 122").

7. Système de distribution de carburant (102) selon une quelconque des revendications précédentes, comprenant en outre un capteur de température (124) pour la détection de la température du carburant.

8. Système de distribution de carburant (102) selon la revendication 7, une pluralité de capteurs de température étant placée dans des emplacements espacés au sein du système de distribution de carburant (102).
